# EUROPEAN PATENT APPLICATION

(11) **EP 1 342 767 A1**
(43) Date of publication of application: **10.09.2003**
(21) Application number: 03002427.7
(22) Date of filing: 05.02.2003
(51) Int. Cl.: C09K 3/16, D21H 27/16, H01B 1/00

(54) **Electroconductive paper and carrier for electronic member using said paper**

(30) Priority: 27.02.2002 JP 2002051902
(71) Applicant: LINTEC Corporation, Tokyo (JP)
(72) Inventor: Yagura, Mitsuaki, Lintec Corporation, Kumagaya-shi, Saitama (JP); Morio, Sadakazu , Lintec Corporation, Kumagaya-shi, Saitama (JP)
(74) Representative: Gille Hrabal Struck Neidlein Prop Roos

(57) **Abstract**

There are disclosed electroconductive paper which comprises on at least one side thereof, an electroconductive·substance·containing layer having a surface resistivity of at most 10⁷ Ω and a surface pH in the range of 5.5 to 8.0, and which has preferably a half-life period of static electricity being at most 0.2 second and a concentration of sulfate ions of at most 1 ppm, the ions being extracted by subjecting 1 g of electroconductive paper to an extraction treatment in 70 milliliter (mL) of deionized water at 100°C for 1 hour; and a carrier for an electronic member which carrier uses the electroconductive paper. The above electroconductive paper is capable of suppressing the corrosion of the electronic member due to the generation of sulfate ions and the like, and thereby is well suited for use as a carrier for the electronic member.

## Description

### BACKGROUND OF THE INVENTION

### 1 . Field of the Invention

The present invention relates to electroconductive paper, and in particular to electroconductive paper which has an electroconductive-substance-containing layer possessing a surface resistivity of a specific value or less and an almost neutral surface pH on at least one side thereof, and which is well suited for use as a carrier for an electronic member.

### 2 . Description of the Related Arts

A fine electronic member has heretofore been supported on a carrier in the case of being transported or stored for the purpose of preventing individual electronic member from damaging each other, or of enhancing the workability in a subsequent step. For instance, in the case of a light-emitting diode having a metallic portion, transfer of the aforesaid diode is carried out by fastening a terminal of the metal portion to a narrow carrier in the form of tape by means of a hot melt adhesive or the like.

The characteristics required of such carrier include (1) to be electroconductive for the purpose of preventing dust or the like from adhering thereto or preventing the electronic member from being electrically damaged due to static electricity; (2) the surface pH of the carrier to be almost neutral in order that the metallic portion of the electronic member may not be corroded; (3) ions of a corrosive impurity, particularly sulfate ions are not to be generated in order that the metallic portion of the electronic member may not be corroded; and the like.

There have hitherto been employed as an electroconductive carrier, a carrier made of plastics containing powdery electroconductive substance such as carbon black, fibrous electroconductive substance such as carbon fibers and paper coated or incorporated inside with the above-exemplified electroconductive substance. However, a carrier made of plastics involves the problems of a fear of causing environmental pollution in the incineration after its service, liability to moisture condensation. On the other hand, a carrier made of paper, although being less liable to moisture condensation and generation of static electricity as compared with the carrier made of plastics, involves the problems of a fear of corroding the electronic member by a large amount of sulfate ions generated from the use of aluminum sulfate as a fixing agent or the use of an additive for paper making containing chemicals as a source of producing sulfate ions and the like.

### SUMMARY OF THE INVENTION

In the light of the above-mentioned circumstances, a general object of the present invention is to provide electroconductive paper which is imparted with electroconductivity on at least one side thereof, and capable of suppressing the corrosion of the electronic member due to the generation of sulfate ions or the like and at the same time, to provide a carrier for the electronic member by using the above-mentioned electroconductive paper.
Other objects of the present invention will become obvious from the text of this specification hereinafter disclosed.

As a result of intensive extensive research and investigation accumulated by the present inventors in order to achieve the objects as mentioned before, it has been found that the objects can be achieved by electroconductive paper which has an electroconductive-substance-containing layer possessing a surface resistivity of a specific value or less and an almost neutral surface pH on at least one side thereof. The present invention has been accomplished by the above-mentioned findings and information.
Specifically, the present invention provides the followings.
1. Electroconductive paper which comprises on at least one side thereof, an electroconductive substance-containing layer having a surface resistivity of at most 10⁷ Ω and a surface pH in the range of 5.5 to 8.0.
2. The electroconductive paper as set forth in the preceding item 1, which has a half-life period of static electricity being at most 0.2 second.
3. The electroconductive paper as set forth in the preceding item 1 or 2, wherein the concentration of sulfate ions thereof is at most 1 ppm, which are extracted by subjecting 1 g of electroconductive paper to an extraction treatment in 70 milliliter (mL) of deionized water at 100°C for 1 hour.
4. A carrier for the electronic member which carrier makes use of the electroconductive paper as set forth in the preceding item 1, 2 or 3.

### DESCRIPTION OF THE PREFERRED EMBODIMENTS

The electroconductive paper according to the present invention needs to comprise on at least one side thereof, an electroconductive-substance-containing layer. The constitution thereof is not specifically limited, but is exemplified by monolayer or multi-layer electroconductive paper composed only of a layer or layers each containing an electroconductive substance; double-layered electroconductive paper composed of a layer containing an electroconductive substance and a layer not containing the same; triple-layered electroconductive paper composed of a layer not containing an electroconductive substance and on both the sides thereof, two layers each containing the same; and the like.

The layer containing an electroconductive substance and the layer not containing the same each constituting the electroconductive paper according to the present invention is made of paper manufactured by a conventional sheet making process.
As fibers for raw material of paper to be used in the present invention, there are cited natural pulp and synthetic pulp, various fibers and the like to be used in combination with the natural pulp as desired. The above-mentioned natural pulp is not specifically limited, but may be optionally selected for use from wood pulp, non-wood pulp such as last fiber and ganpi fiber.
In addition, examples of usable kinds of pulp include mechanical pulp such as ground wood pulp which is obtained by mechanically treating a raw material; chemical pulp which is obtained by treating a raw material with a chemical agent such as sulfite pulp, soda pulp, sulfate pulp (kraft pulp), nitrate pulp and chlorine pulp; semi-chemical pulp which is obtained by chemical treatment and mechanical treatment in combination; bleached pulp which is obtained by subjecting any of the foregoing pulp to bleaching refining treatment; unbleached pulp which is not subjected bleaching refining treatment; semi-bleached pulp which is intermediate between bleached pulp and unbleached; and the like pulp. Of these are preferable needle-leaved tree bleached kraft pulp (N - BKP), broad-leaved tree bleached kraft pulp (L - BKP) and a mixture thereof. Reclaimed waste pulp is also usable.

Examples of synthetic pulp to be used when desired include synthetic pulp obtained from such material as polyethylene and polypropylene. Examples of various fiber include organic fiber such as acrylic fiber, rayon fiber, phenolic resin fiber, polyamide base fiber, polyester base fiber and polyolefin base fiber and inorganic fiber such as glass fiber and alumina fiber.

As the electroconductive substance to be used in the present invention, mention is made of powdery carbonaceous electroconductive substance such as carbon black and graphite electroconductive powdery metal oxide such as tin oxide, titanium oxide and zinc oxide; metal fiber such as copper, nickel and zinc; electroconductive fiber coated by metal vapor deposition; carbon fiber; organic electroconductive high molecular compounds such as polythiazine, halogenated polyacetylene, poly-p-phenylene, and the like. The above-cited electroconductive substances are preferably in the form of fiber rather than powder in order to prevent dust generation.

Any of these electroconductive substance may be used alone or in combination with at least one other. The amount thereof to be blended is selected usually in the range of 1 to 100 parts by weight based on 100 parts by weight of the above-mentioned fiber for raw material of paper. The amount thereof, when being less than 1 part by weight based on the same, gives rise to insufficient electroconductivity, whereas the amount, when being more than 100 parts by weight based on the same, results in failure to exhibit the working effect on enhancing electroconductivity considering the amount and rather leads to the cause for deteriorating the physical properties as electroconductive paper. For this reason, the amount to be blended is in the range of preferably 1 to 50 parts by weight, particularly preferably 5 to 20 parts by weight based on the same.

In the electroconductive paper according to the present invention, the electroconductive-substance-containing layer has a surface resistivity of at most 10⁷ Ω . The surface resistivity, when being more than 10⁷ Ω , gives rise to insufficient electroconductivity, thereby brings about unsuccess in sufficiently exerting the function of preventing dust or the like from adhering the paper surface or preventing the electronic member from being electrically damaged due to static electricity, whereby the objects of the present invention are not achieved. The surface resistivity thereof is preferably at most 10⁵ Ω . The lower limit thereof is not restricted in particular, but is usually 10 ¹ Ω, approximately. The measuring method for the surface resistivity will be described hereinafter.

The surface pH of the electroconductive-substance-containing layer is in the range of 5.5 to 8.0. The surface pH thereof, when being less than 5.5, causes corrosion of the metallic portion of the electronic member, whereby the objects of the present invention are not achieved. On the other hand, the surface pH thereof, when being more than 8.0, sometimes brings about corrosion of terminals of the electronic member depending upon the raw material thereof, or exerts adverse influence upon the performance of the electronic member. The measuring method for the surface pH will be described hereinafter.

The half-life period of static electricity of the electroconductive paper according to the present invention is preferably at most 0.2 second. The half-life period thereof, when being more than 0.2 second, will cause insufficiency in preventing charge-up due to static electricity, thereby gives rise to a fear of unsuccess in sufficiently exerting the function of preventing dust or the like from adhering the surface or preventing the electronic member from being electrically damaged due to static electricity. The lower limit thereof is not restricted in particular, but is usually 0.01 second, approximately. The measuring method for the half-life period of static electricity will be described hereinafter.
In addition, the concentration of sulfate ions of the electroconductive paper according to the present invention is preferably at most 1 ppm, which are extracted by subjecting 1 g of electroconductive paper to an extraction treatment in 70 milliliter (mL) of deionized water at 100°C for 1 hour. When the concentration of sulfate ions thereof is more than 1 ppm, the oxide film on the surface of metallic terminals is liable to be attacked, thereby unfavorably increasing the corrosion rate. The measuring method for the concentration of sulfate ions will be described hereinafter.

The electroconductive paper in which the surface pH and concentration of sulfate ions are each within the above-prescribed range can be produced by neutralized paper making. By the term neutralized paper making as used herein is meant sizing treatment without the use of aluminum sulfate or neutralization by chemical treatment at the time of paper making.
The electroconductive paper having such properties according to the present invention is well suited for use as a carrier for the electronic member.
The electroconductive-substance-containing layer in the electroconductive paper according to the present invention can be produced by preparing aqueous suspension containing the above-mentioned fiber for raw material of paper and electroconductive substance each at a prescribed proportion, and subjecting the resultant suspension to paper making by a conventional well known method.

The aforesaid aqueous suspension may be properly optionally incorporated when desired with any of a variety of neutral additives for paper making which have heretofore been used for paper making such as fixing agent, wet paper strengthening agent, dry paper strengthening agent, sizing agent and filler. It is preferable in the present invention to prevent the use of the additives for paper making which contain a compound that comes to be a source of generating sulfate ions from the resultant electroconductive paper.

As the aforesaid fixing agent, mention is made of polyethylene-imine resin, a derivative thereof, polyacrylamide resin, polyamine resin, acrylic resin, polyamide resin, polyethylene oxide resin, polyamide / polyamine resin, a derivative thereof, basic polyaluminum chloride, basic polyaluminum hydroxide and alumina sol.
As the aforesaid wet paper strengthening agent, mention is made of epoxidized polyamide resin, polyamide resin, epoxy resin, melamine resin, melamine / formalin resin and urea a / formalin resin.
As the aforesaid dry paper strengthening agent, mention is made of acrylic resin, polyamine resin, polyacrylamide resin, oxidized starch, carboxylated starch, cationized starch, vegetable gum, polyvinyl alcohol resin and carboxymethyl cellulose.
As the aforesaid sizing agent, mention is made of at least one species selected from sizing agents such as alkyl ketene dimer, alkenyl maleic anhydride, polystyrene base resin and higher fatty acid base resin.

As the aforesaid filler, mention is made of mineral base fillers such as talc, kaolin, calcined kaolin, clay, diatomaceous earth, ground calcium carbonate, magnesium carbonate, aluminum hydroxide, titanium dioxide, silica, aluminosilicate and bentonite, organic base fillers such as polystyrene grains and urea / formalin resin grains.
The aforesaid aqueous suspension may be properly optionally incorporated when desired with an additive aid for paper making such as dyestuff, slime controlling agent, antifoaming agent and thickening agent.
In the present invention, a sheet containing an electroconductive substance is prepared by carrying out paper making by the use of the aqueous suspension which comprises fiber as raw material of paper, an electroconductive substance and any of a variety of additives to be used when desired and which is prepared in the above-mentioned manner, so that monolayer electroconductive paper is obtained. On the other hand in the case where the electroconductive paper according to the present invention contains a layer which is free from an electroconductive substance, a sheet free from an electroconductive substance is prepared by carrying out paper making by the use of the aqueous suspension which comprises fibers as raw material of paper and any of a variety of additives to be used when desired and which is prepared in the same manner as above except that the aqueous suspension is free from an electroconductive substance. Subsequently, the above-prepared sheet containing an electroconductive substance and the sheet free from an electroconductive substance are together subjected to paper making, so that electroconductive paper having double-layer or triple-layer structure is obtained.

It is possible to coat or impregnate the surfaces of the electroconductive paper according to the present invention obtained in the foregoing manner with a surface strengthening agent such a oxidized starch, polyvinyl alcohol, surface sizing agent, pigment and any of various high molecular compounds during or after a paper making step by a coating method using a size press, gate roll, air knife or blade roll.
In the electroconductive paper according to the present invention, there are usable the above-cited additives for paper making, additive aids for paper making and coating / impregnating chemical agents, each being anionic, cationic, nonionic or amphoteric. However as mentioned hereinabove, it is preferable not to use the additives, additive aids and chemical agents containing a compound that comes to be a source of generating sulfate ions in order, to suppress the concentration of sulfate ions to at most 1 ppm, which are extracted by subjecting 1 g of electroconductive paper to an extraction treatment in 70 mL of deionized water at 100°C for 1 hour. As the additives, additive aids and chemical agents containing a compound that comes to be a source of generating sulfate ions, mention is made, for instance, of emulsion solutions dispersed with an anionic emulsifier containing a sulfate such as aluminum sulfate, basic aluminum sulfate, ferrous sulfate, sulfonates and ester salts of ether sulfuric acid.
A proper basis weight of the electroconductive paper according to the present invention is in the range of 64 to 600 g / m² (total basis weight of all layers for a plurality of layers), preferably 200 to 500 g / m².

In summarizing the working effects and advantages of the present invention, it is possible to provide electroconductive paper which is imparted with electroconductivity on at least one side thereof and capable of suppressing the corrosion of the electronic member due to the generation of sulfate ions and the like and at the same time, to provide a carrier for the electronic member using the aforesaid electroconductive paper.

In the following, the present invention will be described in more detail with reference to comparative examples and working examples, which however shall never limit the present invention thereto. The physical properties of the electroconductive paper obtained in the examples were determined by the procedures as described hereunder.

### (1) Surface pH

Surface pH was determined in accordance with JAPAN TAPPI 1 - 1 A.

### (2) Surface resistivity Ω

Surface resistivity Ω was determined by a method in which both the ends of electroconductive paper measuring 210 mm by 210 mm in size in the machine direction (direction of paper parallel to the advance direction of a paper machine) were sandwiched with clips each made of stainless steel with 145 mm wide so that the distance therebetween was set on 200 mm, each of the clips was brought into contact with an electrode of a tester (available from TMK Co. Ltd. under the trade name "Multitester-VF-10"), and the indicated value at that time was regarded as the surface resistivity.

### (3) Amount of extracted sulfate ions

1 g of electroconductive paper sample was immersed in 70 mL of deionized water so as to carry out extraction at 100°C for 1 hour, and a measurement was made of the sulfate ions (ppm) in the resultant extract, wherein the deionized water was defined as having a volume specific resistance of at least 15 kΩ · cm (25 °C). At that time, in order to prevent the hand from coming in direct contact with the electroconductive paper, use was made of double-layered cotton gloves covered with outer gloves made of polyethylene.
The measurement of extracted sulfate ions was carried out by means of ion chromatography (available from Japan Dionex Co. Ltd. under the trade name "DX320") using as the standard sulfate ion solution, the solution of 1,000 g of K₂SO₄ dissolved in 1 liter of deionized water. The ion extraction vessel used therein was a vessel which was equipped with a hermetically sealing lid and made of polypropylene, wherein the impurity level in the vessel was limited to at most one fifth of a possible impurity level at the time of measuring the electroconductive paper sample.

### (4) Half-life period of static electricity

Half-life period of static electricity was determined by the use of a static neostometer (available from Shishido Shokai Japan Co. Ltd.) at a temperature of 23 °C at a relative humidity of 50% and at an applied voltage of 10 kV.

### (5) Corrosion test for carrier

Corrosion test for carrier was carried out by a corrosion accelerating test under the conditions including a temperature of 60 °C and a relative humidity of 90 % for 10 days by sandwiching a terminal portion of a copper-made light emitting diode the terminal of which was plated with silver with carriers in which electroconductive paper was used, and then change in color, if any, was visually observed.

### Example 1

A sheet was prepared from a paper material prepared by adding to 100 parts by weight of wood pulp (N-BKP / L-BKP ratio by weight being 20 / 80), 10 parts by weight expressed in terms of solid content, of carbon pigment (available from Mikuni Pigment Co. Ltd. under the trade name "Grand Black AM - 1000") as the electroconductive substance; 0.05 part by weight expressed in terms of solid content, of polyethylene-imine resin (available from Nippon Shokubai Kagaku Kogyo Co. Ltd. under the trade name " Epomin P-1000") as the fixing agent; 0.5 part by weight expressed in terms of solid content, of epoxidized polyamide resin (available from Japan PMC Co. Ltd. under the trade name "WS - 570") as the wet paper strengthening agent; and 0.5 part by weight expressed in terms of solid content, of polystyrene resin (available from Seiko Chemical Industries Co. Ltd. under the trade name "Pearl Gum CS") as the sizing agent. The resultant sheet was coated on both sides thereof in an amount of 3 g / m² expressed in terms of solid content with oxidized starch (available from Oji Corn Starch Co. Ltd. under the trade name "Oji Ace A") as the surface strengthening agent at the time of paper making with a size press coater. As a result, there was obtained electroconductive paper which had a basis weight of 300 g / m² , and the physical properties of which are given in Table 1.

### Example 2

A sheet was prepared from a paper material prepared by adding to 100 parts by weight of wood pulp (N-BKP / L-BKP ratio by weight being 20 / 80), 5 parts by weight of carbon fiber (available from Toho Tenacs Co. Ltd. under the trade name "Besfite Ae" cut into a size of 3 mm) as the electroconductive substance; 0.5 part by weight expressed in terms of solid content, of epoxidized polyamide resin (available from Japan PMC Co. Ltd. under the trade name "WS - 570") as the wet paper strengthening agent; and 0.5 part by weight expressed in terms of solid content, of polystyrene resin (available from Seiko Chemical Industries Co. Ltd. under the trade name "Pearl Gum CS") as the sizing agent.
As a result, there was obtained electroconductive paper which had a basis weight of 300 g / m² , and the physical properties of which are given in Table 1.

### Example 3

By the use of a paper machine for double-layer paper making which was equipped with Fourdrinier wire and a cylinder mould, double-layer paper making was carried out to produce electroconductive paper composed of two layers consisting of a layer free from an electroconductive substance and a layer containing an electroconductive substance.
A paper material for the Fourdrinier wire was prepared by adding to 100 parts by weight of wood pulp (N-BKP / L-BKP ratio by weight being 20 / 80), 0.5 part by weight expressed in terms of solid content, of epoxidized polyamide resin (available from Japan PMC Co. Ltd. under the trade name "WS - 570") as the wet paper strengthening agent; 0.5 part by weight expressed in terms of solid content, of polystyrene resin (available from Seiko Chemical Industries Co. Ltd. under the trade name "Pearl Gum CS") as the sizing agent; and 0.5 part by weight expressed in terms of solid content, of acrylic resin (available from Arakawa Chemical Industries Co. Ltd. under the trade name "Polystoron 191") as the dry paper strengthening agent.
On the other hand, a paper material for the cylinder mould was prepared by using the materials same as in Example 1.
The resultant paper was coated on both sides thereof in an amount of 3 g / m² expressed in terms of solid content with oxidized starch (available from Oji Corn Starch Co. Ltd. under the trade name "Oji Ace A") as the surface strengthening agent at the time of paper making with a size press coater. As a result, there was obtained electroconductive paper which was composed of two layers and had a basis weight of 400 g / m ² in which the Fourdrinier wire side had a basis weight of 350 g / m² , and the cylinder mould side had a basis weight of 50 g / m² . The physical properties of the resultant electroconductive paper are given in Table 1.

### Comparative Example 1

A sheet was prepared from a paper material prepared by adding to 100 parts by weight of wood pulp (N-BKP / L-BKP ratio by weight being 20 / 80), 10 parts by weight expressed in terms of solid content, of carbon pigment (available from Mikuni Pigment Co. Ltd. under the trade name "Grand Black AM - 1000") as the electroconductive substance; 0.5 part by weight expressed in terms of solid content, of rosin size (available from Arakawa Chemical Industries Co. Ltd. under the trade name "Sizepine E-50") as the sizing agent; 1 part by weight expressed in terms of solid content, of aluminum sulfate (available from Sumitomo Aluminum Co. Ltd. under the trade name "Aluminum sulfate"); and 0.5 part by weight expressed in terms of solid content, of epoxidized polyamide resin (available from Japan PMC Co. Ltd. under the trade name "WS - 570") as the wet paper strengthening agent. The resultant paper material was coated on both sides thereof in an amount of 3 g / m² expressed in terms of solid content with oxidized starch (available from Oji Corn Starch Co. Ltd. under the trade name "Oji Ace A") as the surface strengthening agent at the time of paper making with a size press coater. As a result, there was obtained electroconductive paper which had a basis weight of 300 g / m² , and the physical properties of which are given in Table 1.

### Comparative Example 2

A sheet was prepared from a paper material prepared by adding to 100 parts by weight of wood pulp (N-BKP / L-BKP ratio by weight being 20 / 80), 10 parts by weight expressed in terms of solid content, of carbon pigment (available from Mikuni Pigment Co. Ltd. under the trade name " Grand Black AM - 1000") as the electroconductive substance; 0.05 part by weight expressed in terms of solid content, of polyethylene-imine resin (available from Nippon Shokubai Kagaku Kogyo Co. Ltd. under the trade name "Epomin P-1000") as the fixing agent; 0.5 part by weight expressed in terms of solid content, of epoxidized polyamide resin (available from Japan PMC Co. Ltd. under the trade name "WS - 570") as the wet paper strengthening agent. The resultant paper material was impregnated with an acrylic emulsion dispersed with an anionic emulsifier containing a sulfonate (available from Rohm and Hass Co. Ltd. under the trade name "PrimalTR - 934HS") in an amount of 10 g / m² expressed in terms of solid content as the dry paper strengthening agent at the time of paper making with a size press coater.
As a result, there was obtained electroconductive paper which had a basis weight of 300 g / m² , and the physical properties of which are given in Table 1.

### Comparative Example 3

A sheet was prepared from a paper material prepared by adding to 100 parts by weight of wood pulp (N-BKP / L-BKP ratio by weight being 20 / 80), 0.5 part by weight expressed in terms of solid content, of epoxidized polyamide resin (available from Japan PMC Co. Ltd. under the trade name "WS - 570") as the wet paper strengthening agent; and 0.5 part by weight expressed in terms of solid content, of polystyrene resin (available from Seiko Chemical Industries Co. Ltd. under the trade name "Pearl Gum CS") as the sizing agent. The resultant paper material was coated on both sides thereof in an amount of 3 g / m² expressed in terms of solid content with oxidized starch (available from Oji Corn Starch Co. Ltd. under the trade name "Oji Ace A") as the surface strengthening agent at the time of paper making with a size press coater. As a result, there was obtained paper which was free from any electroconductive substance and had a basis weight of 300 g / m² , and the physical properties of which are given in Table 1.

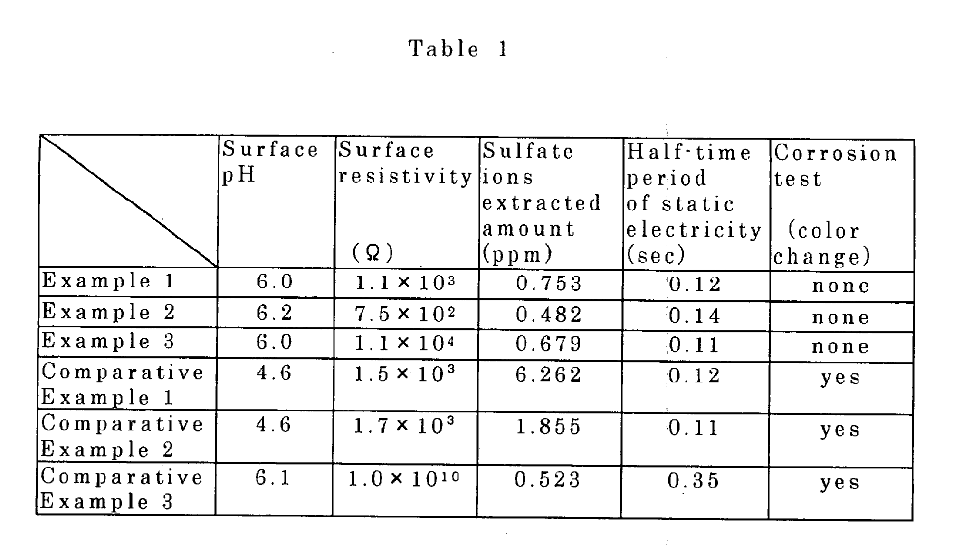

## Claims

1. Electroconductive paper which comprises on at least one side thereof, an electroconductive-substance-containing layer having a surface resistivity of at most 10 ⁷ Ω and a surface pH in the range of 5.5 to 8.0.

2. The electroconductive paper according to Claim 1, which has a half-life period of static electricity being at most 0.2 second.

3. The electroconductive paper according to Claim 1, wherein the concentration of sulfate ions thereof is at most 1 ppm, which are extracted by subjecting 1 g of electroconductive paper to an extraction treatment in 70 milliliter (mL) of deionized water at 100°C for 1 hour.

4. The electroconductive paper according to Claim 2, wherein the concentration of sulfate ions thereof is at most 1 ppm, which are extracted by subjecting 1 g of electroconductive paper to an extraction treatment in 70 mL of deionized water at 100°C for 1 hour.

5. A carrier for an electronic member which carrier makes use of the electroconductive paper as set forth in Claim 1.

6. A carrier for an electronic member which carrier makes use of the electroconductive paper as set forth in Claim 2.

7. A carrier for an electronic member which carrier makes use of the electroconductive paper as set forth in Claim 3.
